# EUROPEAN PATENT SPECIFICATION

(11) **EP 4 434 730 B1**
(45) Date of publication and mention of the grant of the patent: **15.07.2026**
(21) Application number: 22911885.6
(22) Date of filing: 20.12.2022
(51) Int. Cl.: B29C 65/00, H01M 50/105, H01M 50/178, B29L 31/00, H01M 10/04

(54) **BATTERY CASE SEALING DEVICE AND BATTERY CASE SEALING METHOD USING THE SAME**
BATTERIEGEHÄUSEDICHTUNGSVORRICHTUNG UND BATTERIEGEHÄUSEDICHTUNGSVERFAHREN DAMIT
DISPOSITIF D'ÉTANCHÉITÉ DE BOÎTIER DE BATTERIE ET PROCÉDÉ D'ÉTANCHÉITÉ DE BOÎTIER DE BATTERIE L'UTILISANT

(30) Priority: 20.12.2021 KR 20210183210
(43) Date of publication of application: 25.09.2024
(73) Proprietor: LG Energy Solution, Ltd., Seoul 07335 (KR)
(72) Inventor: KIM, Do Jae, Daejeon 34122 (KR)
(74) Representative: Plasseraud IP
(86) International application number: PCT/KR2022/020883
(87) International publication number: WO 2023/121252

(56) References cited:
- WO-A1-2021/167130
- WO-A1-2021/235580
- KR-A- 20190 023 649
- KR-A- 20200 026 064
- KR-A- 20200 026 064
- KR-A- 20200 059 392
- KR-A- 20200 093 956
- KR-B1- 102 163 499
- KR-B1- 102 287 763

## Description

### TECHNICAL FIELD

The present application claims the benefit of the priority of Korean Patent Application Nos. 10-2021-0183210, filed on December 20, 2021, and 10-2022-0179477, filed on December 20, 2022.

The present invention relates to a battery case sealing device and a battery case sealing method using the same, and more particularly, to a battery case sealing device, which performs sealing of a pouch type battery case, and a battery case sealing method using the battery case sealing device.

### BACKGROUND ART

Batteries (cells) that generate electrical energy through a physical reaction or a chemical reaction of a substance to supply the generated power source to the outside are used when alternating current power source to be supplied to the building is not obtained, or direct current power source is required according to the living environments surrounded by various electrical and electronic devices.

Among such batteries, primary batteries and secondary batteries, which are chemical batteries using the chemical reaction, are being generally used. The primary batteries are consumable batteries which are collectively referred to as dry batteries. The secondary batteries are rechargeable batteries that are manufactured using a material in which a redox process between a current and a substance is repeatable several times. When a reduction reaction is performed on the material by the current, a power supply is charged, and when an oxidation reaction is performed on the material, the power supply is discharged. Such a charging-discharging is repeatedly performed to generate electricity.

In recent market, attention has been paid to a pouch type secondary battery having a small volume and a high degree of freedom in design. Specifically, a pouch type secondary battery is a secondary battery in which an electrode assembly is accommodated in a pouch type battery case. Here, the battery case generally has a multi-film structure in which an inner resin layer, a metal layer, and an outer resin layer are sequentially stacked from the inside toward the outside.

Such a battery case has a sealing structure in which the inner resin layer is thermally fused and sealed at at least a portion of an outer circumference so that the electrode assembly therein is not exposed to external moisture and air.

WO2021167130A1 relates to a pouch-type secondary battery packaging equipment providing a high safety sealing of the pouch.

As the battery case has an increased thickness for a change in electrode lead thickness and improvement in secondary battery energy density for quick charging of a secondary battery, heat amount and pressure necessary for the sealing of the battery case are required to increase.

However, in a sealing device having one press according to the related art, when a heating temperature of the press is increased, there are problems that a surface of the battery case is melted or wrinkles are caused by heat, and when pressure at which the press presses the battery case is increased, there is a problem that a portion of the inner resin layer flows to the inside or outside of the battery case.

KR20200026064 relates to a non-contact sealing method of pouch type secondary battery, solving the problem of unsealed or deteriorated quality caused by increasing the temperature.

In addition, when the heat amount and pressure conditions of the sealing device are decreased, it is apparent that sealing quality is reduced and, in particular, there are problems that thermal losses occur in an electrode lead having a low rate of temperature rise and the sealing quality of the battery case is markedly reduced at a position corresponding to the electrode lead.

Accordingly, in the sealing device according to the related art, it is very difficult to select the heat amount and pressure conditions for ensuring the sealing quality of the battery case having a large thickness.

### DISCLOSURE OF THE INVENTION

### TECHNICAL PROBLEM

The present invention has been devised to solve the problems as above, and one aspect of the present invention is to provide a battery case sealing device, which is capable of securing sealing quality even when sealing is performed on a battery case having a large thickness, and a battery case sealing method using the battery case sealing device.

### TECHNICAL SOLUTION

The present invention provides a battery case sealing device as defined in claim 1 including: a primarily sealing unit that presses and seals a battery case in which an electrode assembly is accommodated; a pair of primarily heating units that are disposed in front and rear, respectively, of the primarily sealing unit and heat the battery case; and a transfer part that transfers the battery case along a transfer line.

The primarily heating units may extend in a transfer direction of the battery case.

The primarily heating units may heat the battery case in a non-contact manner.

The battery case may have at least one end from which an electrode lead electrically connected to the electrode assembly protrudes, and the primarily sealing unit may press and seal an area that corresponds to the electrode lead in the battery case.

Meanwhile, the battery case sealing device according to the present invention further includes a secondary sealing unit that is disposed behind the primarily sealing unit and the primarily heating units and presses and seals the battery case.

In addition, the battery case sealing device according to the present invention further includes a secondary heating unit that is disposed behind the secondary sealing unit and heats the battery case.

Moreover, the secondary heating unit may extend in the transfer direction of the battery case.

The secondary heating unit may heat the battery case in a non-contact manner.

A pressing area on which the secondary sealing unit presses the battery case may be larger than a pressing area on which the primarily sealing unit presses the battery case.

Meanwhile, the present invention provides a battery case sealing method as defined in claim 8 including: a first heating process of heating a battery case in which an electrode assembly is accommodated; a first sealing process of pressing and sealing the battery case after the first heating process; and a second heating process of heating the battery case after the first sealing process.

In at least one of the first heating process or the second heating process, the battery case may be heated in a transfer direction of the battery case, along a transfer line.

In at least one of the first heating process or the second heating process, the battery case may be heated in a non-contact manner.

In the first sealing process, the sealing may be performed at a position corresponding to an electrode lead protruding from at least one end of the electrode assembly.

Meanwhile, the battery case sealing method according to the present invention further includes a second sealing process of pressing and sealing the battery case after the first sealing process and the second heating process.

In addition, the battery case sealing method according to the present invention further includes a post-heating process of heating the battery case after the second sealing process.

### ADVANTAGEOUS EFFECTS

According to the preferred embodiments of the present invention, the pair of primarily heating units may be provided in front and rear, respectively, of the primarily sealing unit and thus, there are the advantages that the sufficient heat amount necessary for the battery case sealing may be secured, the rapid changes in temperature of the battery case may be prevented, and the thermal losses during the transfer of the battery case may be prevented to improve the damage to the battery case outer appearance and the sealing quality of the battery case.

In addition, the secondary sealing unit and the primarily sealing unit may be included to press and seal the sealing area of the battery case multiple times and thus, there is the advantage that the sealing quality may be secured even when the thickness of the battery case increases.

Moreover, the primarily sealing unit, the secondary sealing unit, the primarily heating unit, and the secondary heating unit may be used to variously select the heat amount and pressure conditions for the sealing of the battery case and thus, there is the advantage that it is possible to quickly and easily correspond to the sealing of the battery case having the large thickness as well.

### BRIEF DESCRIPTION OF THE DRAWINGS

FIG. 1 is a front view of a secondary battery.
FIGS. 2a to 2d are schematic views sequentially illustrating states in which the secondary battery in FIG. 1 is manufactured.
FIG. 3 is a schematic conceptual view illustrating a configuration of a battery case sealing device according to Embodiment 1 of the present invention.
FIG. 4 is a side view more specifically illustrating a configuration of a primarily sealing unit in the battery case sealing device in FIG. 2.
FIG. 5 is a flowchart sequentially illustrating a battery case sealing method according to Embodiment 2 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Battery case sealing device (100)

The present invention provides a battery case sealing device 100 including a primarily sealing unit 110, which presses and seals a battery case 12 in which an electrode assembly 11 is accommodated, a pair of primarily heating units 120, which are disposed in front and rear, respectively, of the primarily sealing unit 110 and heat the battery case 12, and a transfer part 130 that transfers the battery case 12.

First, the battery case 12, which is sealed by the battery case sealing device 100 and constitutes a secondary battery 10 together with the electrode assembly 11, is described before a configuration of the battery case sealing device 100 is described.

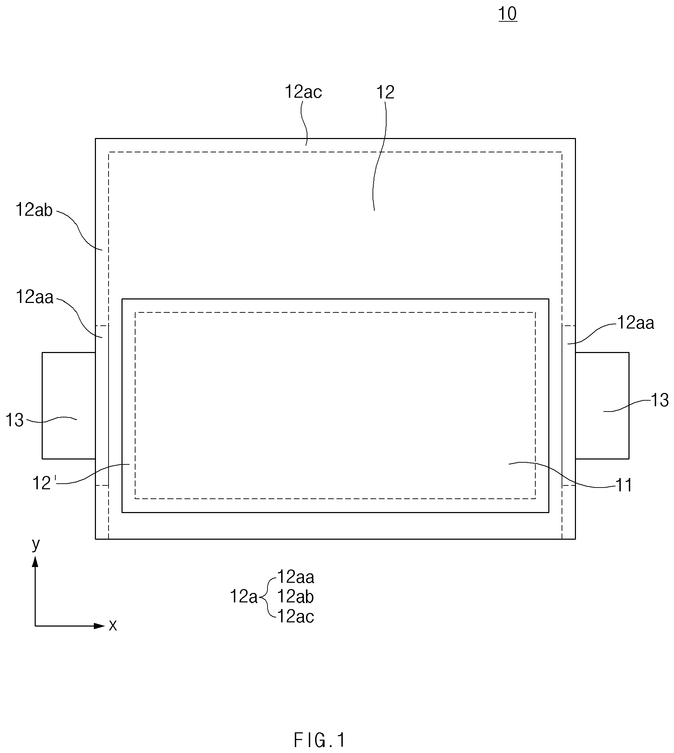

The battery case 12 is a component in which the electrode assembly 11 is accommodated, as illustrated in FIG. 1, and may have various configurations. Here, the electrode assembly 11 is a component that is accommodated in the battery case 12, and it is noted that the electrode assembly 11 is indicated by dotted lines.

Here, the electrode assembly 11 is a component, in which an electrode active material is applied onto an electrode collector to configure each of a positive electrode and a negative electrode and a separator is interposed between the positive electrode and the negative electrode, and may have a wound type structure, a stacked type structure, a stack and folding type structure, or the like. This electrode assembly 11 may be accommodated together with an electrolyte in the battery case 12.

Specifically, the battery case 12 may be provided with an accommodation part 12', in which the electrode assembly 11 is accommodated, and have at least one end from which an electrode lead 13 electrically connected to the electrode assembly 11 protrudes. Here, the accommodation part 12' may be understood as an area that is concavely formed in at least one area of the battery case 12 so that the electrode assembly 11 is accommodatable therein.

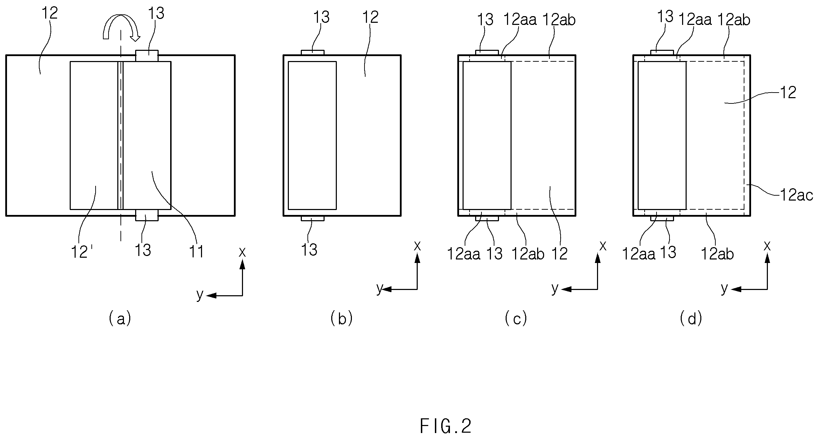

More specifically, in a state in which the battery case 12 in which the electrode assembly 11 is accommodated is unfolded before folding as illustrated in FIG. 2a, the battery case 12 may be folded in half in a longitudinal direction (y direction in FIG. 2b) of the battery case 12 as illustrated in FIG. 2b, thereby manufacturing the battery case 12.

Such a battery case 12 may have a sealing structure in order to prevent the electrode assembly 11, which is accommodated in the accommodation part 12', from being damaged by exposure to external moisture, air, and the like.

Specifically, the battery case 12 may include a sealing area 12a formed by attaching some areas of an outer circumference of the battery case 12 to each other. Here, when the battery case 12 is folded or at least two battery cases 12 are provided to overlap each other and form areas in which the battery cases 12 are in contact with each other, the outer circumference is heated and/or pressed to attach the areas to each other in an area, and this area may be understood as the sealing area 12a.

More specifically, the sealing area 12a may include a first sealing area 12aa, which corresponds to the electrode lead 13, of the sealing area 12a formed in the longitudinal direction (y direction in FIG. 1) of the battery case 12, a second sealing area 12ab, which is a remaining area except for the first sealing area 12aa, of the sealing area 12a formed in the longitudinal direction (y direction in FIG. 1) of the battery case 12, and a third sealing area 12ac which is formed in a width direction (x direction in FIG. 1) of the battery case 12.

Here, the first sealing area 12aa is an area in which the electrode lead 13 is in contact with the battery case 12, and may be understood as an area in which sealing between the electrode lead 13 and the battery case 12 is performed.

The sealing area 12a may be formed by performing sealing on the first sealing area 12aa and the second sealing area 12ab as illustrated in FIG. 2c, and then performing sealing on the third sealing area 12ac as illustrated in FIG. 2d. Here, the electrolyte may be introduced into the accommodation part 12' after the sealing is performed on the first sealing area 12aa and the second sealing area 12ab and before the sealing is performed on the third sealing area 12ac.

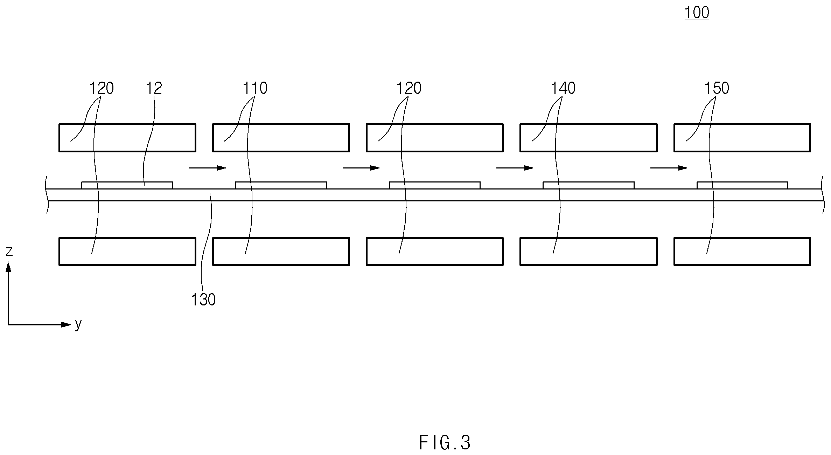

Meanwhile, the battery case 12 may be transferred by the transfer part 130. Specifically, the battery case 12 may be transferred with the electrode assembly 11 accommodated therein by the transfer part 130. The transfer part 130 may be constituted by a conveyor belt, a plurality of rollers, or the like. Here, as illustrated in FIG. 3, the battery case 12 is transferred so as to pass the primarily sealing unit 110, the primarily heating units 120, a secondary sealing unit 140, and a secondary heating unit 150, which are be described below.

Here, the primarily sealing unit 110 is a component, which presses and seals the battery case 12, and may have various configurations. The primarily sealing unit 110 may press and seal an area that corresponds to the electrode lead in the battery case.

Specifically, the primarily sealing unit 110 may be disposed at at least one of an upper side or a lower side of the battery case 12 transferred by the transfer part 130, and press at least a portion of the outer circumference of the battery case 12, thereby sealing the sealing area 12a. To this end, the primarily sealing unit 110 may be provided to be vertically movable toward the battery case 12. Here, the primarily sealing unit 110 may also perform the sealing of the sealing area 12a by pressing and heating the at least a portion of the outer circumference of the battery case 12 at the same time.

In more detail, the primarily sealing unit 110 may press and seal at least one of the first sealing area 12aa, the second sealing area 12ab, or the third sealing area 12ac. That is, when each of the sealing areas is formed to be stepped, the primarily sealing unit 110 may include a shape that is stepped so as to correspond to the shape of each of the sealing areas.

Here, as the secondary sealing unit 140 to be described later is additionally provided in the present invention, the primarily sealing unit 110 may perform the sealing limitedly on the first sealing area 12aa that is disposed to correspond to the electrode lead 13 in the battery case 12.

That is, the primarily sealing unit 110 may perform the sealing limitedly on the first sealing area 12aa, considering that a seal stepped portion may occur when the sealing is performed on the same area multiple times, and since losses of a heat amount necessary for the sealing occur in the electrode lead 13 having a lower rate of temperature rise than the battery case 12, the sealing quality is reduced at a position corresponding to the electrode lead 13.

Meanwhile, the pair of primarily heating units 120 may be provided in front and rear, respectively, of the primarily sealing unit 110. Hereinafter, for convenience of explanation, a direction directed to a direction in which the battery case 12 is transferred on the transfer part 130 is referred to as a rear side, and a direction opposite to the rear side is referred to a front side.

Specifically, the primarily heating units 120 are components, which are disposed in front and rear, respectively, of the primarily sealing unit 110 and heat the battery case 12 as illustrated in FIG. 2, and may have various configurations.

For example, each of the primarily heating units 120 may extend in a transfer direction of the battery case 12 in order to minimize the thermal losses of the battery case 12, which may be caused by the battery case 12 transfer.

Specifically, the primarily heating unit 120 may extend in the transfer direction of the battery case 12 so as to supply heat to the battery case 12 continuously. To this end, the primarily heating unit 120 may include a plurality of heating blocks (not shown) that are arranged in the transfer direction of the battery case 12. Accordingly, the primarily heating unit 120 may minimize the thermal losses that may occur in the battery case 12 during the transfer of the battery case 12.

In addition, the primarily heating unit 120 may heat the battery case 12 in a non-contact manner.

Specifically, the primarily heating unit 120 may include a non-contact type heating means such as high-frequency heating means, infrared heating means, or ultraviolet heating means, and may be spaced a predetermined distance from the battery case 12 and heat the battery case 12 in the non-contact manner. Accordingly, the primarily heating unit 120 may heat the battery case 12 simultaneously with the transfer of the battery case 12 so as to minimize the thermal losses of the battery case 12 and perform the process continuously.

The primarily heating unit 120 may form the high temperature atmosphere in the battery case 12 continuously before the sealing is performed on the battery case 12 by the primarily sealing unit 110 and after the sealing is performed on the battery case 12, thereby securing the sealing quality sufficiently without applying excessive pressure.

Here, the high temperature may be understood as a temperature higher than the room temperature. Here, the room temperature means a range of temperatures, which is called a constant temperature in the relevant field. The room temperature generally refers to a temperature at which humans are comfortable, and may be understood to be typically about 15°C to about 20°C. Accordingly, the temperature higher than the room temperature may be a temperature of 20°C or higher, and more specifically, when a material of the inner resin layer of the sealing area 12a is a polypropylene resin, the temperature higher than the room temperature may be understood to be 160°C to 190°C.

Specifically, the primarily heating unit 120 of the pair of primarily heating units 120, which is disposed in front of the primarily sealing unit 110, may enable the battery case 12 to secure the heat amount necessary for the sealing in advance before the sealing is performed on the battery case 12. This allows the inner resin layer of the sealing area 12a to be sufficiently melted even when the battery case 12 having a large thickness is sealed, and thus, may help to improve the sealing quality. In other words, when the sealing process is performed in high-temperature and high-pressure environments after the heating by the primarily sealing unit 110, there is a problem that the inner resin layer that has not been melted is pressed and is not precisely sealed. Such a problem may be prevented by preheating by the primarily heating unit 120 disposed in front of the primarily sealing unit 110.

Here, the thickness of the battery case 12 may be understood to be 180 µm to 190 µm. However, it is noted that the thickness of the battery case 12 is not limited thereto.

In addition, the primarily heating unit 120 of the pair of primarily heating units 120, which is disposed in rear of the primarily sealing unit 110, may prevent rapid changes in temperature of the battery case 12 after the sealing is performed on the battery case 12 and minimize generation of bubbles in the inner resin layer. Specifically, when the temperature of the battery case 12 changes rapidly after the sealing process, the resin layer is rapidly solidified in a state in which the air present in the resin layer has not been discharged, and thus, the problem that the bubbles are formed in the resin layer may occur. That is, the primarily heating unit 120 disposed in rear of the primarily sealing unit 110 may maintain the high-temperature environments so that the air in the resin layer is gradually discharged. Accordingly, the generation of bubbles in the inner resin layer may be minimized.

Moreover, the primarily heating unit 120 may allow the inner resin layer of the sealing area 12a to be melted sufficiently before sealing is performed by the secondary sealing unit 140. Thus, the primarily heating unit 120 may also help to improve the sealing quality.

Meanwhile, the battery case 12 sealing device according to the present invention further includes the secondary sealing unit 140 that is disposed in rear of the primarily sealing unit 110 and the primarily heating units 120 and presses and seals the battery case 12.

Specifically, the secondary sealing unit 140 is a component, which presses and seals at least a portion of the outer circumference of the battery case 12, and may have various configurations.

Specifically, the secondary sealing unit 140 may be disposed at at least one of the upper side or the lower side of the battery case 12 transferred by the transfer part 130, and press and seal the at least a portion of the outer circumference of the battery case 12. To this end, the secondary sealing unit 140 may be provided to be vertically movable toward the battery case 12. Here, the secondary sealing unit 140 may also perform the sealing on the sealing area 12a by pressing and heating the at least a portion of the outer circumference of the battery case 12 at the same time.

Meanwhile, the secondary sealing unit 140 may seal at least one of the first sealing area 12aa, the second sealing area 12ab, or the third sealing area 12ac described above.

Here, a pressing area on which the secondary sealing unit 140 presses the battery case 12 may be larger than a pressing area on which the primarily sealing unit 110 presses the battery case 12.

Specifically, the secondary sealing unit 140 may press and seal a larger area than the primarily sealing unit 110, considering that an area that is not sealed by the primarily sealing unit 110 needs to be sealed to form a sealing structure of the battery case 12, and even an area sealed by the primarily sealing unit 110 may be additionally sealed in order to supplement the sealing quality.

For example, when the primarily sealing unit 110 presses and seals the first sealing area 12aa, the secondary sealing unit 140 may press and seal at least one of the second sealing area 12ab or the third sealing area 12ac together with the first sealing area 12aa.

Meanwhile, the present invention further includes the secondary heating unit 150 that is disposed in rear of the secondary sealing unit 140 and heats the battery case 12.

Specifically, the secondary heating unit 150 is a component, which heats the battery case 12, and may have various configurations.

For example, the secondary heating unit 150 may extend in the transfer direction of the battery case 12 in order to minimize the thermal losses of the battery case 12, which may be caused by the battery case 12 transfer.

Specifically, the secondary heating unit 150 may extend in the transfer direction of the battery case 12 so as to supply heat to the battery case 12 continuously. To this end, the secondary heating unit 150 may include a plurality of heating blocks (not shown) that are arranged in the transfer direction of the battery case 12. Accordingly, the secondary heating unit 150 may minimize the thermal losses that may occur in the battery case 12 during the transfer of the battery case 12.

In addition, the secondary heating unit 150 may heat the battery case 12 in a non-contact manner.

Specifically, the secondary heating unit 150 may be spaced a predetermined distance from the battery case 12 and heat the battery case 12 in the non-contact manner through a non-contact type heating means such as high-frequency heating means, infrared heating means, or ultraviolet heating means. Accordingly, the secondary heating unit 150 may heat the battery case 12 simultaneously with the transfer of the battery case 12 and thus, may minimize the thermal losses of the battery case 12 and may perform the process continuously.

The secondary heating unit 150 may prevent rapid changes in temperature of the battery case 12 after the sealing is performed on the battery case 12, and minimize generation of bubbles in the inner resin layer.

Meanwhile, the primarily sealing unit 110 may have various structures.

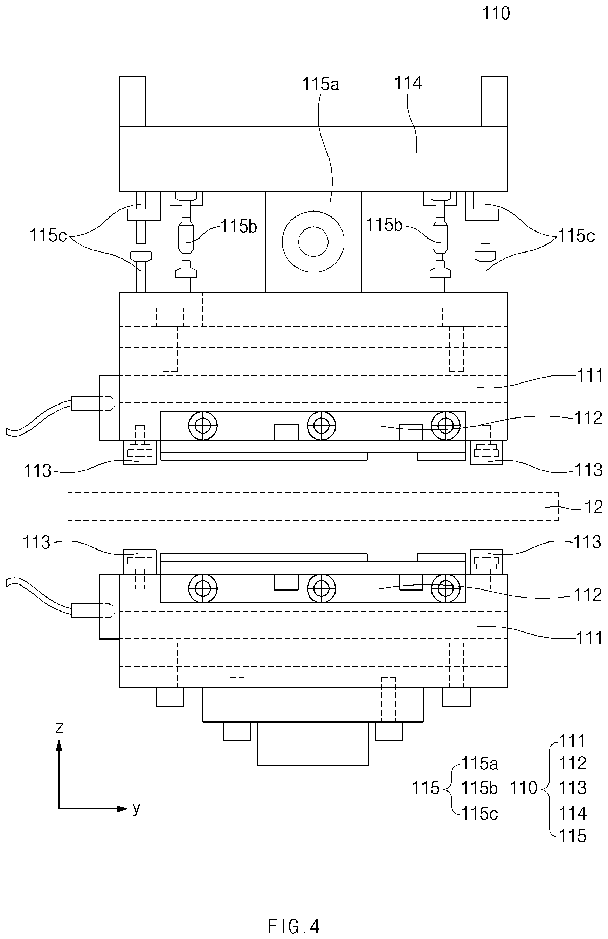

Hereinafter, the structure of the primarily sealing unit 110 is described more specifically with reference to FIG. 4. The structure of the primarily sealing unit 110 may apply also to the secondary sealing unit 140, and it is noted that hereinafter, only the structure of the primarily sealing unit 110 is described for convenience of explanation.

For example, as illustrated in FIG. 4, the primarily sealing unit 110 may include a body part 111, and a press part 112 that is coupled to the body part 111 and presses the battery case 12.

Here, the body part 111 may have a structure in which multiples blocks are stacked and bolt-coupled to each other. Here, at least one of the blocks may be connected to an external electrical device and generate the temperature higher than the room temperature. Here, the meaning of the room temperature may be cited from the foregoing contents.

The press part 112 is a component, which presses the battery case 12, and may have various configurations.

For example, the press part 112 may protrude from one surface of the body part 111 toward the battery case 12 and perform the pressing of the sealing area 12a described above. Here, the sealing area 12a may include at least one of the first sealing area 12aa, the second sealing area 12ab, or the third sealing area 12ac. This press part 112 may have various shapes. Here, the press part 112 may be changed to correspond to the shape of the sealing area 12a.

Meanwhile, a pair of thickness adjusting stoppers 113 may be provided at both sides, respectively, of the press part 112.

Specifically, the thickness adjusting stoppers 113 are components for adjusting a thickness of the sealing area 12a pressed by the press part 112, and may be provided at the both sides, respectively, of the press part 112 and protrude from the body part 111 toward the battery case 12.

Here, a protrusion height to which each of the thickness adjusting stoppers 113 protrudes from the body part 111 may be variously set, but preferably, the protrusion height of the thickness adjusting stopper 113 may be set to be longer than a protrusion height of the press part 112. Here, the protrusion height of the thickness adjusting stopper 113 may be understood as a height from one surface of the body part 111 to one surface of the thickness adjusting stopper 113, which is disposed in a direction opposite to the body part 111 and in contact with the battery case 12. The protrusion height of the press part 112 may be understood as a height from the one surface of the body part 111 to one surface of the press part 112, which is disposed in the direction opposite to the body part 111 and in contact with the battery case 12.

Meanwhile, as illustrated in FIG. 4, the primarily sealing unit 110 may be disposed at each of the upper side and the lower side of the battery case 12. Here, the primarily sealing unit 110, which is disposed at the upper side of the battery case 12, may further include a tilt adjusting part 115 that adjusts a tilt of each of the body part 111 and the press part 112 so that the thickness of the sealing area 12a of the battery case 12 is uniform.

Specifically, the primarily sealing unit 110 may further include an elevating part 114, which is connected to an external elevating device (not shown) and ascends and descends, and the tilt adjusting part 115 which is provided between the elevating part 114 and the body part 111 and adjusts the tilt of each of the body part 111 and the press part 112.

More specifically, the tilt adjusting part 115 may include a connecting part 115a, which connects the elevating part 114 and the body part 111 to each other, and a pair of deformation parts 115b, each of which has both ends connected to the elevating part 114 and the body part 111, respectively, and is deformed to be contracted.

That is, when one of the pair of deformation parts 115b contracts, the other may stretch to adjust the tilt of each of the body part 111 and the press part 112. Here, the connecting part 115a may be provided to be rotatable.

Meanwhile, the tilt adjusting part 115 may further include a pair of tilt stoppers 115c that restrict a tilt degree of each of the body part 111 and the press part 112. Here, the tilt stoppers 115c may protrude from the elevating part 114 and the body part 111, respectively, so as to face each other, and may be provided so as to be spaced apart from each other. Accordingly, when each of the body part 111 and the press part 112 is inclined at a preset angle or greater, the tilt stoppers 115c may mechanically restrict the tilt of each of the body part 111 and the press part 112.

### Battery case sealing method

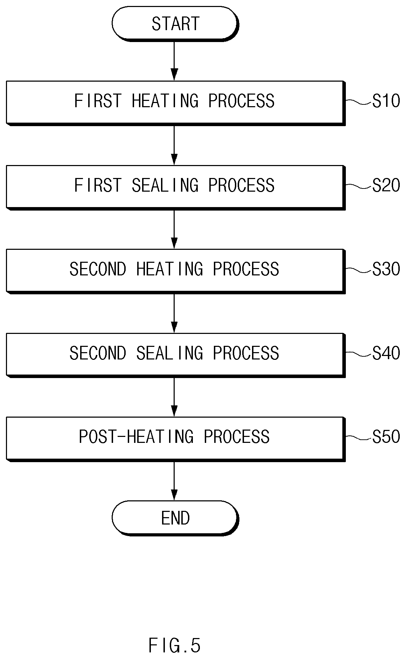

Meanwhile, as illustrated in FIG. 5, the present invention provides a battery case 12 sealing method including a first heating process of heating a battery case 12 in which an electrode assembly 11 is accommodated (S10), a first sealing process of pressing and sealing the battery case 12 after the first heating process (S10) (S20), and a second heating process of heating the battery case 12 after the first sealing process (S20) (S30). Here, each of the processes may be carried out simultaneously with transfer of the battery case 12.

Here, the first heating process (S10) is a process of heating the battery case 12 in which the electrode assembly 11 is accommodated, and may be performed through various methods.

Specifically, the first heating process (S10) may be performed by heating the battery case 12 by using a primarily heating unit 120, which is disposed in front of a primarily sealing unit 110, before the first sealing process (S20). Accordingly, there is an advantage that the battery case 12 may secure a heat amount necessary for the sealing in advance through the first heating process (S10) before the sealing process is performed. Here, specific contents of the primarily heating unit 120 may be cited from the foregoing contents.

In this first heating process (S10), the battery case 12 may be heated in a transfer direction of the battery case 12. Accordingly, the first heating process (S10) may minimize thermal losses that may occur during the transfer of the battery case 12.

In addition, the battery case 12 may be heated in a non-contact manner in the first heating process (S10). Specifically, the first heating process (S10) may be performed by heating the battery case 12 in a non-contact manner using high frequency, infrared, ultraviolet, or the like.

Meanwhile, the first sealing process (S20) of sealing the battery case 12 may be performed after the first heating process (S10).

Specifically, the first sealing process (S20) is a process of pressing and sealing the battery case 12 after the first heating process (S10), and may be performed in various methods. Here, the first sealing process (S20) may be performed by the foregoing primarily sealing unit 110, and specific contents of the primarily sealing unit 110 may be cited from the foregoing contents.

Here, at least one of a first sealing area 12aa, a second sealing area 12ab, or a third sealing area 12ac may be pressed and sealed in the first sealing process (S20).

Here, as a second sealing process (S40) to be described later is additionally provided in the present invention, the sealing may be performed limitedly on the first sealing area 12aa, which is disposed to correspond to the electrode lead 13, in the first sealing process (S20).

That is, the sealing may be performed limitedly on the first sealing area 12aa in the first sealing process (S20), considering that a seal stepped portion may occur when the sealing is performed on the same area multiple times, and since losses of a heat amount necessary for the sealing occur in the electrode lead 13 having a lower rate of temperature rise than the battery case 12, the sealing quality is reduced at a position corresponding to the electrode lead 13.

Meanwhile, the second heating process (S30) of heating the battery case 12 is performed after the first sealing process (S20).

Specifically, the second heating process (S30) is a process of heating the battery case 12 after the first sealing process (S20), and may be performed in various methods.

Specifically, the second heating process (S30) may be performed by heating the battery case 12 by using a primarily heating unit 120, which is disposed in rear of the primarily sealing unit 110, after first sealing process (S20). Here, specific contents of the primarily heating unit 120 may be cited from the foregoing contents.

Accordingly, the second heating process (S30) may enable an inner resin layer of a sealing area 12a to be sufficiently melted after the sealing is performed, and minimize generation of bubbles according to rapid changes in temperature.

In addition, the inner resin layer of the sealing area 12a may be sufficiently melted through the second heating process (S30) before the sealing is performed through the second sealing process (S40). Thus, the second heating process (S30) may also help to improve the sealing quality.

In this second heating process (S30), the battery case 12 may be heated in the transfer direction of the battery case 12. Accordingly, the thermal losses that may occur during the transfer of the battery case 12 may be minimized in the second heating process (S30).

In addition, the battery case 12 may be heated in a non-contact manner in the second heating process (S30). Specifically, the second heating process (S30) may be performed by heating the battery case 12 in a non-contact manner using high frequency, infrared, ultraviolet, or the like.

Meanwhile, the battery case 12 sealing method according to the present invention further includes the second sealing process (S40) of sealing the battery case 12 after the first sealing process (S20) and the second heating process (S30).

Specifically, the second sealing process (S40) is a process of pressing and sealing the battery case 12 after the first sealing process (S20) and the second heating process (S30), and may be performed in various methods.

Here, the second sealing process (S40) may supplement the sealing of the battery case 12 by pressing and sealing an area, which is not pressed in the first sealing process (S20) described above, by using the foregoing secondary sealing unit 140 described above, or by additionally pressing an area that is pressed and sealed in the first sealing process (S20). Here, specific contents of the secondary sealing unit 140 may be cited from the foregoing contents.

Specifically, at least one of the first sealing area 12aa, the second sealing area 12ab, or the third sealing area 12ac may be sealed in the second sealing process (S40).

Here, a pressing area on which the battery case 12 is pressed in the second sealing process (S40) may be larger than a pressing area on which the battery case 12 is pressed in the first sealing process (S20) described above.

Specifically, an area to be sealed in the second sealing process (S40) may be larger than an area to be sealed in the first sealing process (S20), considering that an area that is not sealed in the first sealing process (S20) described above needs to be sealed to form a sealing structure of the battery case 12, and even the area sealed in the first sealing process (S20) described above may be additionally sealed in order to supplement the sealing quality.

For example, when only the first sealing area 12aa is pressed and sealed in the first sealing process (S20), at least one of the second sealing area 12ab or the third sealing area 12ac may be sealed together with the first sealing area 12aa in the second sealing process (S40). That is, when only the first sealing area 12aa is sealed in the first sealing process (S20), the first sealing area 12aa and the second sealing area 12ab may be sealed in the second sealing process (S40).

Meanwhile, the battery case sealing method according to the present invention further includes a post-heating process (S50) of heating the battery case 12 after the second sealing process (S40).

Specifically, the post-heating process (S50) is a process of heating the battery case 12 after the second sealing process (S40), and may be performed in various methods.

Specifically, the post-heating process (S50) may be performed by heating the battery case 12 by using a secondary heating unit 150, which is disposed in rear of the secondary sealing unit 140, after the second sealing process (S40). Accordingly, in the post-heating process (S50), the inner resin layer of the sealing area 12a may be sufficiently melted and generation of bubbles according to rapid changes in temperature may be minimized. Here, specific contents of the secondary heating unit 150 may be cited from the foregoing contents.

In this post-heating process (S50), the battery case 12 may be heated in the transfer direction of the battery case 12. Accordingly, the thermal losses that may occur during the transfer of the battery case 12 may be minimized in the post-heating process (S50).

In addition, the battery case 12 may be heated in a non-contact manner in the post-heating process (S50). Specifically, the post-heating process (S50) may be performed by heating the battery case 12 in a non-contact manner using high frequency, infrared, ultraviolet, or the like.

Although the present invention has been described with reference to the limited embodiments and drawings, the present invention is not limited thereto and may be variously implemented by those of ordinary skill in the art to which the present invention pertains.

### [Description of the Symbols]

10: Secondary battery
11: Electrode assembly
12: Battery case
12' Accommodation part
12a: Sealing area
12aa: First sealing area
12ab: Second sealing area
12ac: Third sealing area
13: Electrode lead
100: Battery case sealing device
110: Primarily sealing unit
111: Body part
112: Press part
113: Thickness adjusting stopper
114: Elevating part
115: Tilt adjusting part
115a: Connecting part
115b: Deformation part
115c: Tilt stopper
120: Primarily heating unit
130: transfer part
140: Secondary sealing unit
150: Secondary heating unit
S10: First heating process
S20: First sealing process
S30: Second heating process
S40: Second sealing process
S50: Post-heating process

## Claims

1. A battery case sealing device (100) comprising:
a primarily sealing unit (110) configured to press and seal a battery case (12) in which an electrode assembly (11) is accommodated;
a pair of primarily heating units (120) disposed in front and rear, respectively, of the primarily sealing unit (110) and configured to heat the battery case (12);
a secondary sealing unit (140) disposed behind the primarily sealing unit (110) and the primarily heating units (120) and configured to press and seal the battery case (12);
a secondary heating unit (150) disposed behind the secondary sealing unit (140) and configured to heat the battery case (12); and
a transfer part (130) configured to transfer the battery case (12) along a transfer line.

2. The battery case sealing device of claim 1, wherein the primarily heating units (120) are provided in the transfer line in a transfer direction of the battery case (12),
wherein one of the pair of primarily heating units (120) is disposed in front of the primarily sealing unit (110), and the other of the pair of primarily heating units (120) is disposed behind the primarily sealing unit (110) in the transfer direction of the battery case (12).

3. The battery case sealing device (100) of claim 1, wherein the primarily heating units (120) heat the battery case (12) in a non-contact manner.

4. The battery case sealing device (100) of claim 1, wherein the battery case (12) has at least one end from which an electrode lead (13) electrically connected to the electrode assembly (11) protrudes,
wherein the primarily sealing unit (11) presses and seals an area that corresponds to the electrode lead (13) in the battery case (12).

5. The battery case sealing device of claim 1,
wherein the secondary heating unit extends in the transfer direction of the battery case.

6. The battery case sealing device (100) of claim 1, wherein the secondary heating unit (150) heats the battery case (12) in a non-contact manner.

7. The battery case sealing device (100) of claim 1, wherein a pressing area, on which the secondary sealing unit (140) presses the battery case (12), is larger than a pressing area on which the primarily sealing unit (110) presses the battery case (12).

8. A battery case sealing method comprising:
a first heating process (s10) of heating a battery case (12) in which an electrode assembly (11) is accommodated;
a first sealing process (s20) of pressing and sealing the battery case (12) after the first heating process;
a second heating process (s30) of heating the battery case (12) after the first sealing process;
a second sealing process (s40) of pressing and sealing the battery case (12) after the first sealing process (s20) and the second heating process (s30); and
a post-heating process (s50) of heating the battery case (12) after the second sealing process (s40).

9. The battery case sealing method of claim 8, wherein, in at least one of the first heating process (s10) or the second heating process (s30), the battery case (12) is continuously supplied with heat during a transfer of the battery case (12) in a transfer direction of the battery case (12).

10. The battery case sealing method of claim 8, wherein, in at least one of the first heating process (s10) or the second heating process (s30), the battery case (12) is heated in a non-contact manner.

11. The battery case sealing method of claim 8, wherein, in the first sealing process (s20), the sealing is performed at a position corresponding to an electrode lead (13) protruding from at least one end of the electrode assembly (11).

## Patentansprüche

1. Batteriegehäusedichtungsvorrichtung (100), umfassend: eine primäre Dichtungseinheit (110), die konfiguriert ist, um ein Batteriegehäuse (12), in dem eine Elektrodenanordnung (11) untergebracht ist, zu pressen und zu dichten; ein Paar primärer Heizeinheiten (120), die jeweils vorne und hinten an der primären Dichtungseinheit (110) angeordnet und konfiguriert sind, um das Batteriegehäuse (12) zu erhitzen; eine sekundäre Dichtungseinheit (140), die hinter der primären Dichtungseinheit (110) und den primären Heizeinheiten (120) angeordnet und konfiguriert ist, um das Batteriegehäuse (12) zu pressen und zu dichten; eine sekundäre Heizeinheit (150), die hinter der sekundären Dichtungseinheit (140) angeordnet und konfiguriert ist, um das Batteriegehäuse (12) zu erhitzen; und ein Übertragungsteil (130), das konfiguriert ist, um das Batteriegehäuse (12) entlang einer Übertragungslinie zu übertragen.

2. Die Batteriegehäusedichtungsvorrichtung nach Anspruch 1, wobei die primären Heizeinheiten (120) in der Übertragungslinie in einer Übertragungsrichtung des Batteriegehäuses (12) vorgesehen sind, wobei eine des Paares primärer Heizeinheiten (120) vor der primären Dichtungseinheit (110) angeordnet ist und die andere des Paares primärer Heizeinheiten (120) hinter der primären Dichtungseinheit (110) in der Übertragungsrichtung des Batteriegehäuses (12) angeordnet ist.

3. Die Batteriegehäusedichtungsvorrichtung (100) nach Anspruch 1, wobei die primären Heizeinheiten (120) das Batteriegehäuse (12) berührungslos erhitzen.

4. Die Batteriegehäusedichtungsvorrichtung (100) nach Anspruch 1, wobei das Batteriegehäuse (12) mindestens ein Ende aufweist, von dem ein Elektrodenanschluss (13), der elektrisch mit der Elektrodenanordnung (11) verbunden ist, vorsteht, wobei die primäre Dichtungseinheit (11) einen Bereich, der dem Elektrodenanschluss (13) entspricht, in dem Batteriegehäuse (12) presst und dichtet.

5. Die Batteriegehäusedichtungsvorrichtung nach Anspruch 1, wobei sich die sekundäre Heizeinheit in der Übertragungsrichtung des Batteriegehäuses erstreckt.

6. Die Batteriegehäusedichtungsvorrichtung (100) nach Anspruch 1, wobei die sekundäre Heizeinheit (150) das Batteriegehäuse (12) berührungslos erhitzt.

7. Die Batteriegehäusedichtungsvorrichtung (100) nach Anspruch 1, wobei ein Pressbereich, auf dem die sekundäre Dichtungseinheit (140) das Batteriegehäuse (12) presst, größer ist als ein Pressbereich, auf dem die primäre Dichtungseinheit (110) das Batteriegehäuse (12) presst.

8. Batteriegehäusedichtungsverfahren, umfassend: einen ersten Erhitzungsprozess (s10) des Erhitzens eines Batteriegehäuses (12), in dem eine Elektrodenanordnung (11) untergebracht ist; einen ersten Dichtungsprozess (s20) des Pressens und Dichtens des Batteriegehäuses (12) nach dem ersten Erhitzungsprozess; einen zweiten Erhitzungsprozess (s30) des Erhitzens des Batteriegehäuses (12) nach dem ersten Dichtungsprozess; einen zweiten Dichtungsprozess (s40) des Pressens und Dichtens des Batteriegehäuses (12) nach dem ersten Dichtungsprozess (s20) und dem zweiten Erhitzungsprozess (s30); und einen Nacherhitzungsprozess (s50) des Erhitzens des Batteriegehäuses (12) nach dem zweiten Dichtungsprozess (s40).

9. Das Batteriegehäusedichtungsverfahren nach Anspruch 8, wobei in mindestens einem von dem ersten Erhitzungsprozess (s10) oder dem zweiten Erhitzungsprozess (s30) das Batteriegehäuse (12) während einer Übertragung des Batteriegehäuses (12) in einer Übertragungsrichtung des Batteriegehäuses (12) kontinuierlich mit Wärme versorgt wird.

10. Das Batteriegehäusedichtungsverfahren nach Anspruch 8, wobei in mindestens einem von dem ersten Erhitzungsprozess (s10) oder dem zweiten Erhitzungsprozess (s30) das Batteriegehäuse (12) berührungslos erhitzt wird.

11. Das Batteriegehäusedichtungsverfahren nach Anspruch 8, wobei in dem ersten Dichtungsprozess (s20) das Dichten an einer Position durchgeführt wird, die einem Elektrodenanschluss (13) entspricht, der von mindestens einem Ende der Elektrodenanordnung (11) vorsteht.

## Revendications

1. Dispositif de scellage de boîtier de batterie (100) comprenant :
une unité de scellage principale (110) configurée pour presser et sceller un boîtier de batterie (12) dans lequel un ensemble d'électrodes (11) est logé ;
une paire d'unités de chauffage principales (120) disposées à l'avant et à l'arrière, respectivement, de l'unité de scellage principale (110) et configurées pour chauffer le boîtier de batterie (12) ;
une unité de scellage secondaire (140) disposée derrière l'unité de scellage principale (110) et les unités de chauffage principales (120) et configurée pour presser et sceller le boîtier de batterie (12) ;
une unité de chauffage secondaire (150) disposée derrière l'unité de scellage secondaire (140) et configurée pour chauffer le boîtier de batterie (12) ;
et une partie de transfert (130) configurée pour transférer le boîtier de batterie (12) le long d'une ligne de transfert.

2. Le dispositif de scellage de boîtier de batterie selon la revendication 1, dans lequel les unités de chauffage principales (120) sont prévues dans la ligne de transfert dans une direction de transfert du boîtier de batterie (12),
dans lequel l'une de la paire d'unités de chauffage principales (120) est disposée à l'avant de l'unité de scellage principale (110), et l'autre de la paire d'unités de chauffage principales (120) est disposée derrière l'unité de scellage principale (110) dans la direction de transfert du boîtier de batterie (12).

3. Le dispositif de scellage de boîtier de batterie (100) selon la revendication 1, dans lequel les unités de chauffage principales (120) chauffent le boîtier de batterie (12) de manière sans contact.

4. Le dispositif de scellage de boîtier de batterie (100) selon la revendication 1, dans lequel le boîtier de batterie (12) a au moins une extrémité à partir de laquelle un conducteur d'électrode (13) connecté électriquement à l'ensemble d'électrodes (11) fait saillie, dans lequel l'unité de scellage principale (11) presse et scelle une zone qui correspond au conducteur d'électrode (13) dans le boîtier de batterie (12).

5. Le dispositif de scellage de boîtier de batterie selon la revendication 1, dans lequel l'unité de chauffage secondaire s'étend dans la direction de transfert du boîtier de batterie.

6. Le dispositif de scellage de boîtier de batterie (100) selon la revendication 1, dans lequel l'unité de chauffage secondaire (150) chauffe le boîtier de batterie (12) de manière sans contact.

7. Le dispositif de scellage de boîtier de batterie (100) selon la revendication 1, dans lequel une zone de pressage, sur laquelle l'unité de scellage secondaire (140) presse le boîtier de batterie (12), est plus grande qu'une zone de pressage sur laquelle l'unité de scellage principale (110) presse le boîtier de batterie (12).

8. Procédé de scellage de boîtier de batterie comprenant :
un premier processus de chauffage (s10) consistant à chauffer un boîtier de batterie (12) dans lequel un ensemble d'électrodes (11) est logé ;
un premier processus de scellage (s20) consistant à presser et à sceller le boîtier de batterie (12) après le premier processus de chauffage ;
un deuxième processus de chauffage (s30) consistant à chauffer le boîtier de batterie (12) après le premier processus de scellage ;
un deuxième processus de scellage (s40) consistant à presser et à sceller le boîtier de batterie (12) après le premier processus de scellage (s20) et le deuxième processus de chauffage (s30) ;
et un processus de post-chauffage (s50) consistant à chauffer le boîtier de batterie (12) après le deuxième processus de scellage (s40).

9. Le procédé de scellage de boîtier de batterie selon la revendication 8, dans lequel, dans au moins l'un du premier processus de chauffage (s10) ou du deuxième processus de chauffage (s30), le boîtier de batterie (12) est alimenté en continu en chaleur pendant un transfert du boîtier de batterie (12) dans une direction de transfert du boîtier de batterie (12).

10. Le procédé de scellage de boîtier de batterie selon la revendication 8, dans lequel, dans au moins l'un du premier processus de chauffage (s10) ou du deuxième processus de chauffage (s30), le boîtier de batterie (12) est chauffé de manière sans contact.

11. Le procédé de scellage de boîtier de batterie selon la revendication 8, dans lequel, dans le premier processus de scellage (s20), l'étanchéité est réalisée à une position correspondant à unconducteur d'électrode (13) faisant saillie depuis au moins une extrémité de l'ensemble d'électrodes (11).
